(19) Europäisches Patentamt / European Patent Office / Office européen des brevets

(11) EP 3 067 394 B1

(12) EUROPEAN PATENT SPECIFICATION

(45) Date of publication and mention
of the grant of the patent:
30.01.2019 Bulletin 2019/05

(51) Int Cl.:
C09D 5/14 (2006.01)          C09D 7/61 (2018.01)
C09D 7/40 (2018.01)          C08K 3/22 (2006.01)
C09D 5/16 (2006.01)

(21) Application number: 14858569.8

(22) Date of filing: 04.11.2014

(86) International application number:
PCT/KR2014/010531

(87) International publication number:
WO 2015/065164 (07.05.2015 Gazette 2015/18)

(54) NONPOISONOUS PAINT COMPOSITION CONTAINING ORGANIC AND INORGANIC OXIDATION NANOSTRUCTURES AND METHOD FOR PREPARING SAME

UNGIFTIGE LACKZUSAMMENSETZUNG MIT ORGANISCHEN UND ANORGANISCHEN OXIDATIONSNANOSTRUKTUREN UND VERFAHREN ZUR HERSTELLUNG DAVON

COMPOSITION DE PEINTURE NON TOXIQUE CONTENANT DES NANOSTRUCTURES D'OXYDATION ORGANIQUES ET INORGANIQUES ET SON PROCÉDÉ DE PRÉPARATION

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 04.11.2013 KR 20130133070

(43) Date of publication of application:
14.09.2016 Bulletin 2016/37

(60) Divisional application:
18176146.1 / 3 392 316

(73) Proprietor: Jeju National University
Industry-Academic
Cooperation Foundation
Jeju 690-756 (KR)

(72) Inventors:
• KIM, Sang-Jae
  Jeju-si
  Jeju-do 690-122 (KR)

• KARTHIKEYAN, K.
  Jeju-si
  Jeju-do 690-756 (KR)

(74) Representative: Leanse, Thomas Gordon
Hamilton et al
Venner Shipley LLP
200 Aldersgate
London EC1A 4HD (GB)

(56) References cited:
GB-A- 2 142 239          JP-A- 2006 143 807
KR-A- 20060 041 368      KR-A- 20110 016 287
KR-A- 20130 027 374      US-A1- 2008 008 678

• KARTHIKEYAN.: 'Graphene oxide and Graphene nanosheets: Tunable properties and multifunctional applications.' MECHANICAL ENGINEERING, DOCTOR'S THESIS December 2012,

**Description**

The present invention relates to a paint composition, and more particularly, to a nontoxic paint composition containing zinc oxide (ZnO) nanoparticles (hereinafter, referred to as oxide nanostructures), and a method of preparing the same.

The annual global cost of metal corrosion, which was estimated to be 350 million US dollars in 2010, was continuously growing and was estimated to be about 0.9 billion US dollars yearly by 2015.

Paint is a kind of a material used in the decoration and/or protection of surfaces. These are used in various applied fields, such as, household goods, biomedical devices, and industrial processes (in particular, corrosion protective coating).

Most iron structures containing iron are exposed to corrosion environment, and thus their surfaces are generally treated with corrosion protective coating for the improvement of durability. The corrosion of iron structures refers to the generation of rust ($Fe(OH)_3$ and $Fe_2O_3$) and the cause of rust generation may be oxygen ($O_2$), water ($H_2O$), etc. in the air. Such corrosion appears to be accelerated by contaminated atmosphere, soot and smoke, salt in sea water, acid rain, chemical materials (acids, alkalis, and salts), and the like. As methods for preventing corrosion of the iron structures, anti-corrosion pigments such as red lead, chromic acid, zinc, etc., which become passivated as a reaction inhibiting function as water contacts the metal; or flake anti-corrosion pigments such as aluminum or micaceous iron oxide serving as a barrier against the influx of water or air, which becomes the cause of corrosion; or sacrificial anode which utilizes metal pigments such as zinc which has higher ionization tendency than iron, etc., are used.

Karthikeyan, "Graphene oxide and Graphene nanosheets: Tunable properties and multifunctional applications" Mechanical Engineering, Doctor's Thesis, December 2012 describes the chemical and structural investigation of graphene oxide with different oxidation levels.

Korean Patent No. 503,561 relates to a paint composition for preventing the corrosion of iron structure and improving the long-term durability of iron structure and as a process for forming an aluminum oxide coating layer using the same, the patent discloses a process for forming a metal coating on the iron structure by coating a paint using zinc, chromium, nickel, aluminum oxide, etc. However, when heavy metals such as chromium, lead, etc., are contained for improving anti-corrosion function of paints, the heavy metals may be inhaled through respiratory tract or skin into a body, thereby causing a serious problem and also it is not desirable in view of the environmental aspect.

Additionally, not only the salts in the sea but also the marine organisms inducing macrofouling such as trough shells or limpet play a crucial role in causing corrosion in ships and marine steel structures. In addition, arthropods such as barnacles, seaweeds such as red algae and green algae attach to steel materials and inhabit thereon thereby causing corrosion and interrupting the sailing of ships.

Accordingly, in order to prevent the corrosion and ship sailing-interference caused by various marine organisms, various technologies for antifouling paints and antifouling methods have been developed and used. However, the conventional antifouling paints have the following problems.

First, organotoxic-type tributyltin (TBT) is an antifouling paint prepared by mixing acrylic resin or synthetic resin for magnetic polishing with TBT, and has been most widely used because it has 3 to 5 years as the long antifouling shelf life. However, the material is a fatal environmental hormone that causes imposex and recently it has been known to have problems having a negative effect on environment to be called as a marine herbicide.

Additionally, inorganotoxic-type copper dioxide is an antifouling paint prepared by mixing an inorganic resin with copper dioxide, and it has problems in that it has a short antifouling shelf life, has a serious release of copper oxide at early stage, and also an environmental hormone causing imposex in shellfish.

An arsenic antifouling paint is prepared by mixing acrylic resin or synthetic paint for magnetic polishing with an arsenic material, and it has a good antifouling property but it is a highly toxic material and has a problem in that it induces serious side effects on marine ecological system.

That is, although these conventional technologies are excellent themselves, they have problems due to serious side effects in view of the environmental aspect. Therefore, there is a need for the development of an antifouling paint which has not toxicity and is environment-friendly while maintaining antifouling property.

The present invention is directed to providing an environment-friendly paint composition having improved anti-corrosion property compared to the conventional paints while not containing toxic materials such as a chromate or biocide, by preparing a paint composition through mixing zinc oxide (ZnO) nanoparticles as pigments with alkyd synthetic resin in an optimum ratio.

The present invention is also directed to providing a method of preparing the paint composition.

One aspect of the present invention provides a paint composition containing 15 parts by weight to 20 parts by weight of an oxide nanostructure as a pigment, wherein the oxide nanostructure is zinc oxide nanoparticles; 60 parts by weight to 70 parts by weight of alkyd synthetic resin as a binder; 0.5 part by weight to 1.0 part by weight of a stabilizer; 0.3 part by weight to 0.7 part by weight of an anti-precipitator; 0.05 part by weight to 0.15 part by weight of a thickener; 0.5 part by weight to 1.0 part by weight of a humectant; 1.0 part by weight to 2.0 parts by weight of a desiccant, wherein the desiccant includes 0.5 part by weight to 1.0 part by weight of an external desiccant and 0.5 part by weight to 1.0 part by weight of an internal desiccant, wherein the external desiccant is cobalt naphthenate and the internal desiccant is nano-sized zirconia; and 15 parts by weight to 20 parts by weight of a diluent.

Additionally, the present invention provides a method for preparing a paint composition including an oxide nanostructure, in which the method includes:

(a) mixing 15 parts by weight to 20 parts by weight of an oxide nanostructure as a pigment; 60 parts by weight to 70 parts by weight of alkyd synthetic resin as a binder; 0.5 part by weight to 1.0 part by weight of a stabilizer; 0.3 part by weight to 0.7 part by weight of an anti-precipitator; 0.05 part by weight to 0.15 part by weight of a thickener; 0.5 part by weight to 1.0 part by weight of a humectant; and 1.0 part by weight to 2.0 parts by weight of a desiccant by ball-milling; and

(b) adding 15 parts by weight to 20 parts by weight of a diluent to the ball-milled mixture and further milling to obtain a homogenous paint composition, wherein the oxide nanostructure is zinc oxide nanoparticles.

The paint composition containing an oxide nanostructure according to the present invention is economical and rapidly dried due to a high solid content as compared with the conventional paints, and is environment-friendly due to the absence of toxic materials such as a chromate or biocide. Additionally, the paint composition containing an oxide nanostructure according to the present invention exhibited excellent corrosion resistance in an acidic and high-salt solution, and in particular, as measured in a linear polarization study, the oxide nanopaint coating exhibited about 76% of efficiency of protection from corrosion in salt water. Furthermore, the paint composition containing an oxide nanostructure according to the present invention has excellent effects of inhibiting the growth of bacteria strains (*Escherichia coli, Staphylococcus aureus,* and *Pseudomonas aeruginosa*) and suppressing the adhesion of marine organisms on the painted surface, and thus can be useful as a substitute for paints used in general steel structures and ships or marine steel structures.

FIG. 1 shows an image of graphene oxide nanosheets under high-resolution transmission electron microscopy (HR-TEM) and the insert figure illustrates the selected area electron diffraction (SAED) pattern of graphene oxide nanosheets.

FIG. 2 shows (a) an image of graphene oxide nanopaint and (b) an image of graphene oxide nanopaint which was painted on the drawdown card for measuring the level of gloss and hiding power.

FIG. 3 shows (a) an image of Fourier-transform infrared (FT-IR) spectrum of alkyd synthetic resin and graphene oxide nanopaint and (b) an image of Raman spectrum of alkyd synthetic resin and graphene oxide nanopaint.

FIG. 4 shows (a) an image of X-ray photoelectron spectrum of alkyd synthetic resin and graphene oxide nanopaint under, (b) an image of C1s unwrapped spectrum of graphene oxide nanopaint, which illustrates the presence of C-C, C-O-C, and C-OO groups, (c) an image of graphene oxide nanopaint coating under low magnification (scale - 10 $\mu$m) of a field-emission scanning electron microscopes (FE-SEM), and (d) an image of graphene oxide nanopaint coating under high magnification (scale - 1 $\mu$m) of a field-emission scanning electron microscopes (FE-SEM).

FIG. 5 shows the optical images of GI substrates (uncoated (left) and graphene oxide-painted (right)), in which (a) represents an image before being exposed to an acid and (b) represents an image after impregnating in a 0.1 M HCl solution for 24 hours.

FIG. 6 shows a linear polarization curve of uncoated and graphene oxide nanopaint-coated substrates in a 3.5% NaCl solution.

FIG. 7 is the fluorescent images showing the distribution of *Escherichia coli* after 48 hours, in which (a) represents the surface of the control group, (b) represents the surface coated with graphene oxide-nanopaint (the live cells were observed in green while the dead cells were observed in red; scale bar = 8 $\mu$m), and (c) represents the percentage of the dead cells regarding three different bacteria groups on the surface coated with graphene oxide nanopaint after 24 hours and 48 hours.

FIG. 8 shows the images of (a) substrates coated or uncoated with graphene oxide-nanopaint impregnated in the lagoon having an ebb and flow directly connected with the sea in Jeju, Korea, and (b) an uncoated substrate and a painted substrate before impregnating and at 3 weeks after impregnating.

FIG. 9 shows the result of XRD analysis after coating zinc oxide nanopaint on a glass material, for measuring the binding relationship between zinc oxide and alkyd resin.

FIG. 10 shows the measurement result of Raman spectrum after coating zinc oxide nanopaint on a glass material, for measuring the binding relationship between zinc oxide and alkyd resin.

FIG. 11 shows the images illustrating the results of antifouling characteristics of zinc oxide nanopaint.

FIG. 12 shows the results showing viability of bacteria after coating with molybdenum oxide nanopaint, illustrating (a) the reduction rate of *Escherichia coli,* (b) the reduction rate of *Pseudomonas aeruginosa,* (c) the reduction rate of *Staphylococcus aureus,* and (d) the reduction rate of *Klebsiella pneumoniae.*

As used herein, the term "oxide nanopaint" refers to a paint composition containing an oxide nanostructure such as graphene oxide (GO) nanosheets, zinc oxide (ZnO) nanoparticles, and molybdenum oxide ($MoO_3$) nanoplates, and can be interchangeably used with "a paint composition containing an oxide nanostructure."

As used herein, the terms "paint" and "coating material" refer to the same object and can be interchangeably used within the specification.

Hereinafter, the present invention will be explained in detail.

The present invention provides a paint composition containing 15 parts by weight to 20 parts by weight of oxide nanostructure as a pigment, wherein the oxide nanostructure is zinc oxide nanoparticles; 60 parts by weight to 70 parts by weight of alkyd synthetic resin as a binder; 0.5 part by weight to 1.0 part by weight of a stabilizer; 0.3 part by weight to 0.7 part by weight of an anti-precipitator; 0.05 part by weight to 0.15 part by weight of a thickener; 0.5 part by weight to 1.0 part by weight of a humectant; 0.5 part by weight to 1.0 part by weight of an internal coating desiccant, wherein the desiccant includes 0.5 part by weight to 1.0 part by weight of an external desiccant and 0.5 part by weight to 1.0 part by weight of an internal desiccant, wherein the external desiccant is cobalt naphthenate and the internal desiccant is nano-sized zirconia; 0.5 part by weight to 1.0 part by weight of an external coating desiccant; and 15 parts by weight to 20 parts by weight of a diluent.

The term "graphene" was made by combining "graphite", which refers to a lack lead, and "-ene", which is a suffix referring to a molecule having a double bond. As can be seen from the name, graphene is a material observed in graphite, which is an allotrope consisting of carbon. If pencil lead is placed under an electron microscope, a heap of thin plates are observed. It has a 3-dimensional structure consisting of numerous hexagonal honeycombs connected by carbon atoms, and graphene may be considered as a single most thin layer taken out therefrom. That is, graphene has a structure with a single-layered 2-dimensional flat thin membrane consisting of carbons having a thickness of 0.35 nm. When the graphene compounds are accumulated in a 3-dimensional manner, they are called graphite, when they are accumulated in a 1-dimensional manner, they are called carbon nanotubes, and when the graphene compound has a spherical shape, it is called fullerene, which has a 0-dimensional structure. Graphene was first prepared at room temperature by a research team in the University of Manchester, Britain in 2004.

As used herein, the term "graphene oxide" refers to an oxidized form of a graphene compound and has various functional groups such as epoxyl, hydroxyl, and carbonyl. The graphene oxide nanosheets have advantages in that they have biocompatibility, are not harmful to humans due to non-toxicity, and are environment-friendly.

Additionally, as used herein, the term "zinc oxide (ZnO)" refers to a compound of oxygen and zinc, which is lightweight white powder, and also called zinc flower or zinc white, and is used as a raw material for pharmaceutical drugs, pigments, and cosmetics. Zinc oxide is lightweight white powder which has a melting point of 1,975°C (under added pressure) and 1,720°C (atmospheric pressure), and specific gravity of 5.47 (non-crystalline) and 5.78 (crystalline). When zinc oxide is heated at about 300°C, it turns to yellow, but returns to its original color when it is cooled. Zinc oxide is an amphoteric oxide which is hardly dissolved in water but is dissolved in diluted acid and strong alkalis.

Since the molybdenum can be easily changed into an oxidized form, it can act as an electron transfer material in a redox reaction and molybdenum oxide refers to oxidized molybdenum.

Additionally, the oxide nanostructure according to the present invention can be prepared by a method known in the art, for example, the method described in references [Krishnamoorthy K, et al., Carbon 2012, 53:38 - 49; Krishnamoorthy K, et al., Appl. Phys. Lett. 2011, 98: 244101 (1 - 3)], etc., but the method is not limited thereto.

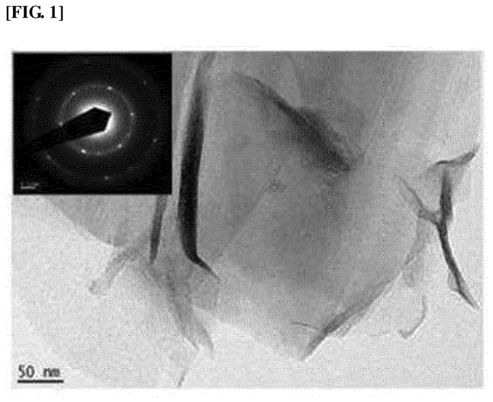

The graphene oxide nanosheets, as shown in FIG. 1, exhibited a morphology like a sheet having the presence of a folded region on the edge. The corresponding selected area electron diffraction (SAED) pattern represents the explicit diffraction point having a 6-layer symmetry, which coincides with a hexagonal lattice. The Raman spectrum of the graphene oxide nanosheets exhibited the presence of the broad D band (1350 $cm^{-1}$) and the G band (1597 $cm^{-1}$), and this is because graphite was oxidized to form graphene oxide.

In the paint composition according to the present invention, the content of the zinc oxide nanosheets is in the range of 15 parts by weight to 20 parts by weight.

In the paint composition according to the present invention, the alkyd synthetic resin plays the role of a binder and accounts for most of the paint composition. The content of the alkyd synthetic resin is in the range of 60 parts by weight to 70 parts by weight.

It is very important to obtain a homogenous mixture of the pigment in the binder for the excellent finishing of the surface. For the improvement of the dispersion, the surface energy of the binder should be minimized and this can be achieved by adding a humectant. In the paint composition according to the present invention, bean lecithin may be used as the humectant, and in particular, the bean lecithin may be used in an amount of 0.5 part by weight to 1.0 part by weight. When the humectant is not added, non-uniform surface finishing may be induced due to the aggregation of graphene oxide nanosheets.

In the paint composition according to the present invention, the desiccant is used for formulation, and in particular, an external desiccant and an internal desiccant is used as the desiccant.

The external desiccant is an active catalyst for the process of lipid oxidation and it causes a more rapid drying time and a more uniform coating on the surface. The internal desiccant is a chemical crosslinking-binder for unsaturated fatty acids and it improves the speed of crosslinking-binding during the drying.

In the paint composition according to the present invention, cobalt naphthenate is the external desiccant, and the external desiccant is used in an amount of 0.5 part by weight to 1.0 part by weight. In the paint composition according to the present invention, nano-sized zirconia is the internal desiccant, and the internal desiccant is used in an amount of 0.5 part by weight to 1.0 part by weight. These desiccants significantly reduce the time for drying the graphene oxide nanopaint.

In the paint composition according to the present invention, a thickener and an anti-precipitator may be used for adjusting viscosity and preventing coagulation, and it is required to use a thickener in an amount of 0.05 part by weight to 0.15 part by weight and an anti-precipitator in an amount of 0.3 part by weight to 0.7 part by weight, respectively. For example, the commercially available thickener A may be used as the thickener and aluminum stearate may be used as the anti-precipitator, but are not limited thereto.

In the paint composition according to the present invention, for long-term storage, a stabilizer may be used for inhibiting the separation of graphene oxide nanosheets in the alkyd synthetic resin and also for reducing the color-fading, and for example, nano-sized ZnO may be used as the stabilizer, but is not limited thereto. It is required to use the stabilizer in an amount of 0.5 part by weight to 1.0 part by weight relative to the total weight of the paint composition.

In the paint composition in an exemplary embodiment according to the present invention, the diluent plays the role of improving antifouling property and coating workability by uniformly mixing a synthetic resin and graphene oxide nanosheets in an efficient manner, and the diluent is preferably at least one selected from a mineral oil-based solvent, an ether-based solvent, a glycidylether-based solvent, an alcohol-based solvent, an ether-based solvent, an ester-based solvent, a ketone-based solvent, a hydrocarbon-based solvent, and a nitrogen-based solvent, and more preferably a mineral oil-based solvent, and even more preferably, mineral turpentine is effective. The content of the diluent may vary depending on the viscosity, and it is required to use the diluent in an amount of 15 parts by weight to 20 parts by weight.

Additionally, the present invention provides a method for preparing the paint composition.

The method of preparing a paint composition according to the present invention includes:

(a) mixing 15 parts by weight to 20 parts by weight of oxide nanostructure as a pigment; 60 parts by weight to 70 parts by weight of alkyd synthetic resin as a binder; 0.5 part by weight to 1.0 part by weight of a stabilizer; 0.3 part by weight to 0.7 part by weight of an anti-precipitator; 0.05 part by weight to 0.15 part by weight of a thickener; 0.5 part by weight to 1.0 part by weight of a humectant; and 1.0 part by weight to 2.0 parts by weight of a desiccant by ball-milling; and
(b) adding 15 parts by weight to 20 parts by weight of a diluent to the ball-milled mixture and further milling to obtain a homogenous paint composition, wherein the oxide nanostructure is zinc oxide nanoparticles.

The method of preparing a paint composition according to the present invention is characterized in that the paint composition is uniformly mixed by a ball-milling process, and the description on the common features between the two inventions are omitted in order to avoid excessive complexity of the specification due to repeated description.

In particular, the ball-milling is characterized in that the milling is maintained at a milling speed of about 300 rpm for 4 hours to 6 hours, added with a diluent, and then the milling is maintained for additional 20 minutes to 1 hour.

The drying mechanism of the oxide nanopaint according to the present invention depends on lipid autoxidation of alkyd synthetic resin, and it is a well-known free-radical mechanism present in oxygen in the atmosphere [Muizebelt WJ, et al., Prog. Org. Coat. 2000, 40: 121 - 30; Bieleman, JH., Wiley-VCH, Weinheim, 2000].

The polyunsaturated fatty acids within the alkyd synthetic resin experience crosslinking-binding by the free radical-mediated chain reaction, and as a result, a dried uniform film coating is induced on the surface [Schaich KM. Baileys Industrial Oil and Fat Products. 6th ed. Edited by Fereidoon Shahidi. John Wiley & Sons, Inc; 2005]. The presence of the graphene oxide pigment within the paint can facilitate the lipid autoxidation due to the carbocatalytic property of graphene oxide for oxidation, polymerization, and ionization of long-chain fatty acids [Liu Y, et al., Rapid Commun. Mass Spectrom. 2011; 25: 3223 - 34]. Graphene oxide can easily crosslinked-bound to macromolecules during the oxidative polymerization and it act as a template for the growth of macromolecules [Park S, et al., ACS Nano. 2008; 4: 572 - 78]. During the ball-mill process, graphene oxide nanosheets become crosslinked-bound to lipid molecules present within the alkyd synthetic resin by electrostatic interaction and hydrogen bond, and this causes the formation of a uniform black paint. Likewise, graphene oxide nanosheets will catalyze the lipid autoxidation process by providing a sufficient amount of oxygen during the drying process. In particular, a partial reduction of graphene oxide may occur due to the free radicals generated during the autoxidation process, and this coincides with the previous report on the reduction of graphene oxide during the bacteria respiration, reduction of free radicals, and chemical functionalization [Akhavan O, et al., Carbon 2012, 50: 1853 - 60; Vinodgopal K, et al., J. Phys. Chem. Lett. 2010; 1: 1987 - 93].

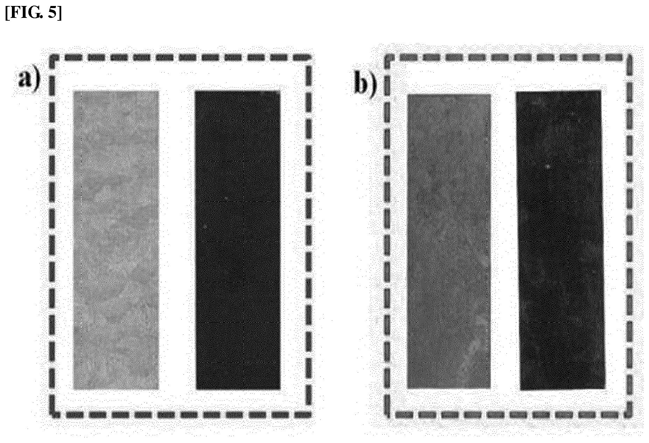

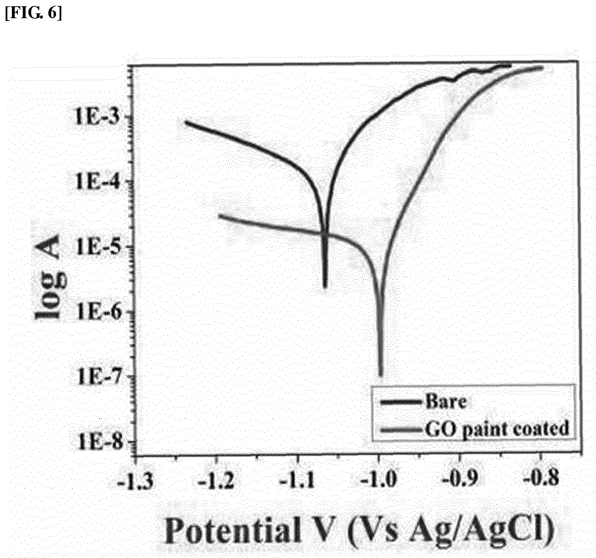

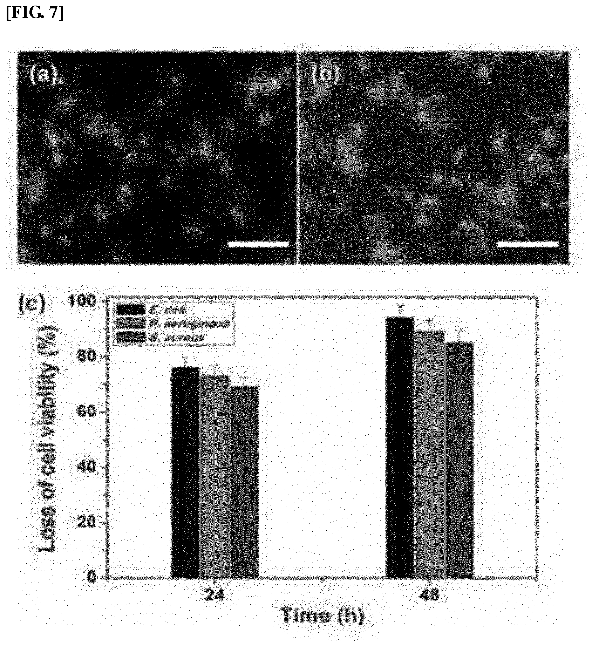

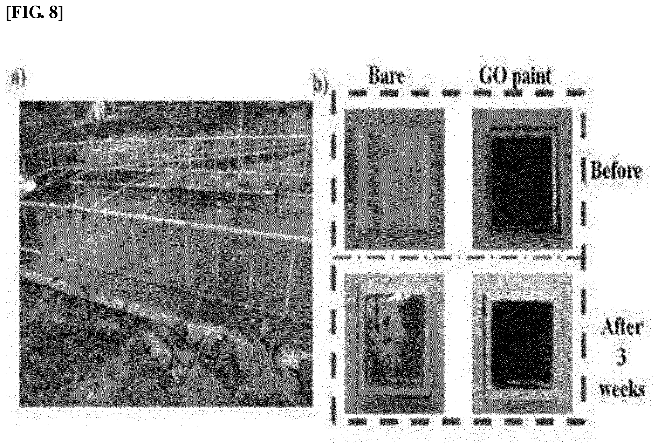

The oxide nanopaint prepared by the above method paint is economical and rapidly dries due to a high solid content as compared with the conventional paints, and is environment-friendly due to the absence of toxic materials such as a chromate or biocide. Additionally, as shown in FIG. 5, the oxide nanopaint exhibited excellent corrosion resistance in an acidic and high-salt solution, and in particular, as shown in FIG. 6, the oxide nanopaint exhibited about 76% of efficiency of protection from corrosion in salt water in linear polarization study. Furthermore, as shown in FIG. 7, the oxide nanopaint has excellent effect of inhibiting the growth of bacteria strains (*Escherichia coli, Staphylococcus aureus,* and *Pseudomonas aeruginosa*), and as shown in FIG. 8, and excellent effect of suppressing the adhesion of marine organisms. Accordingly, the oxide nanopaint according to the present invention can be effectively used as a substitute for paints used in general steel structures and ships or marine steel structures.

Hereinafter, exemplary embodiments of the present invention will be described in detail. However, the present invention is not limited to the exemplary embodiments disclosed below, but can be implemented in various forms. The following exemplary embodiments are described in order to enable those of ordinary skill in the art to embody and practice the invention.

<Reference Example 1>

Preparation of paint composition containing graphene oxide nanosheets (graphene oxide nanopaint)

<1-1> Synthesis of graphene oxide nanosheets

The graphene oxide nanosheets were synthesized according to the revised Hummers method, as described in the reference [Krishnamoorthy K, et al., J. Phys. Chem. C 2012; 116: 17280 - 87].

FIG. 1 shows an image of graphene oxide nanosheets under high-resolution transmission electron microscopy (HRTEM) and they exhibited a morphology like a sheet having the presence of a folded region on the edge. The corresponding selected area electron diffraction (SAED) pattern represents the explicit diffraction point having a 6-layer symmetry, which coincides with a hexagonal lattice. These results coincided with the previous discoveries by Wilson [Wilson NR, et al., ACS Nano 2009; 3: 2547 - 56], etc.

The Raman spectrum of the graphene oxide nanosheets exhibited the presence of the broad D band (1350 $cm^{-1}$) and the G band (1597 $cm^{-1}$), and from this, it was confirmed that graphite was oxidized to form graphene oxide [Krishnamoorthy K, et al., Carbon 2012; 53: 38 - 49]. The graphene oxide nanosheets, upon synthesis, were used for the preparation of graphene oxide nanopaint.

<1-2> Preparation of graphene oxide (GO) nanopaint

Alkyd paint to which graphene oxide nanosheets were bound was prepared using the ball-milling approach, and other additional additives of binders, thickeners, humectants, internal coating desiccants, external coating desiccants, diluents, and stabilizers are listed in Table 1 below.

[Table 1]

| Additive | Material | Object | Wt% |
|---|---|---|---|
| Pigment | Graphene oxide (GO) nanosheets | Provision of paint colors | 16.0 |
| Binder | Amine alkyd resin | Paint film-forming ingredient | 64.0 |
| Stabilizer | Nanosized ZnO | Reduction of the effect of paint color-fading | 0.6 |
| Anti-precipitator | Aluminum stearate | Prevention of precipitation of pigments and binders | 0.5 |
| Thickener | Thickener A | Improvement of viscosity and prevention of coagulation | 0.1 |
| Humectant | Bean lecithin | Moisturization of pigments within the binder for uniform dispersion | 0.6 |
| Internal coating desiccant | Nanosized zirconia | Chemical crosslinking-binding of unsaturated fatty acids | 0.6 |
| External coating desiccant | Cobalt naphthenate | Active catalyst for the progress of lipid autoxidation | 0.6 |
| Diluent (solvent) | Mineral turpentine | Dispersion | 17.0 |

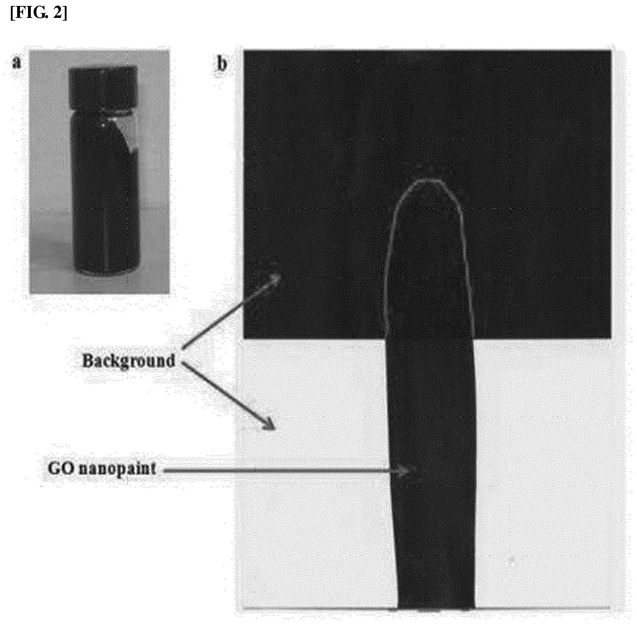

Briefly, all ingredients (except a diluent) of a paint were added into a tungsten carbide bowl and subjected to a milling using a tungsten carbide ball. The weight ratio between the ball and powders was maintained in a ratio of 10 : 1, and the ball milling was maintained at a milling speed of about 300 rpm for 5 hours. Then, a diluent was added thereto, and the milling was continued for 30 minutes. As a result, the uniform black graphene oxide nanopaint was formed as shown in FIG. 2. The final product was collected and stored in a sealed container for the subsequent analysis of characteristics.

<Example 2>

Preparation of a paint containing zinc oxide (ZnO) nanoparticles

Alkyd paint to which zinc oxide (ZnO) was bound was prepared using the ball-milling approach. For the paint, zinc oxide was used as the pigment, and other additional additives of binders, thickeners, humectants, internal coating desiccants, external coating desiccants, diluents, and stabilizers are listed in Table 2 below.

[Table 2]

| Additive | Material | Object | Wt% |
|---|---|---|---|
| Pigment | ZnO nanoparticles | Provision of paint colors | 20.0 |
| Binder | Alkyd resin | Paint film-forming ingredient | 60.0 |
| Stabilizer | Nanosized ZnO | Reduction of the effect of paint color-fading | 0.6 |
| Anti-precipitator | Aluminum stearate | Prevention of precipitation of pigments and binders | 0.5 |
| Thickener | Polyvinyl alcohol | Improvement of viscosity and prevention of coagulation | 0.1 |
| Humectant | Bean lecithin | Moisturization of pigments within the binder for uniform dispersion | 0.6 |
| Internal coating desiccant | Nanosized zirconia | Chemical crosslinking-binding of unsaturated fatty acids | 0.6 |
| ' External coating desiccant | Cobalt naphthenate | Active catalyst for the progress of lipid autoxidation | 0.6 |
| Diluent (solvent) | Toluene | Dispersion | 17.0 |

Briefly, all ingredients (except a diluent) of a paint were added into a tungsten carbide bowl and subjected to a milling using a tungsten carbide ball for 6 hours.

<Reference Example 3>

Preparation of a paint composition containing molybdenum oxide (MoO$_3$) nanoplates

<3-1> Preparation of a molybdenum oxide (MoO$_3$) nanopaint

Alkyd paint to which molybdenum oxide nanoplates were bound was prepared using the ball-milling approach. For the paint, molybdenum was used as the pigment, and other additional additives of binders, thickeners, humectants, internal coating desiccants, external coating desiccants, diluents, and stabilizers are listed in Table 3 below.

[Table 3]

| Additive | Material | Object | Wt% |
|---|---|---|---|
| Pigment | Molybdenum oxide nanosheets | Provision of paint colors | 20.0 |
| Binder | Amine alkyd resin | Paint film-forming ingredient | 60.0 |
| Stabilizer | Nanosized ZnO | Reduction of the effect of paint color-fading | 0.6 |

(continued)

| Additive | Material | Object | Wt% |
|---|---|---|---|
| Anti-precipitator | Aluminum stearate | Prevention of precipitation of pigments and binders | 0.5 |
| Thickener | Thickener A | Improvement of viscosity and prevention of coagulation | 0.1 |
| Humectant | Bean lecithin | Moisturization of pigments within the binder for uniform dispersion | 0.6 |
| Internal coating desiccant | Nanosized zirconia | Chemical crosslinking-binding of unsaturated fatty acids | 0.6 |
| External coating desiccant | Cobalt naphthenate | Active catalyst for the progress of lipid autoxidation | 0.6 |
| Diluent (solvent) | Mineral turpentine | Dispersion | 17.0 |

All ingredients (except a diluent) of a paint were added into a tungsten carbide bowl and subjected to a milling using a tungsten carbide ball. The weight ratio between the ball and powders was maintained in a ratio of 10 : 1, and the ball milling was maintained at a milling speed of about 300 rpm for 5 hours. Then, a diluent was added thereto, and the milling was continued for 30 minutes. As a result, the uniform black graphene oxide nanopaint was formed as shown in FIG. 2. The final product was collected and stored in a sealed container for the subsequent analysis of characteristics.

<Reference Experimental Example 1>

Measurement of characteristics of graphene oxide nanopaint

<1-1> Measurement of gloss and hiding power

The levels of hiding power and gloss of graphene oxide nanopaint was tested by painting a certain amount of the paint on the drawdown card with a controlled thickness of about 150 $\mu$m using a multifunctional film coater. First, 1 g of the paint was placed on the drawdown card and spread using the multifunctional film coater and dried at room temperature. Then, the hiding power of the paint was observed by the naked eye by testing whether the background color (black or white) was covered with the paint. The gloss measurement was performed using the Rajdhani digital gloss meter (RSPT-200 model, India).
As a result, as illustrated in FIG. 2b, regarding the hiding power, the graphene oxide nanopaint perfectly concealed both the black and white background colors of the drawdown card. The gloss level of the graphene oxide nanopaint at 60 was 75 GU. According to the American Society for Testing and Materials (ASTM), which is the standard for tests and materials, the coating of 60 GU at 60 is classified as high-gloss surface, and this confirms the excellent finishing of the surface of the graphene oxide nanopaint described herein.

<1-2> Measurement of solid content of graphene oxide nanopaint

The solid content of a paint refers to the ratio of the solid-phased ingredients relative to the weight of the total ingredients within the paint. The solid content present in the paint was determined by drying 1 g of the paint on dried clock glass. Based on the initial and final measured values of weight, the solid contents of graphene oxide and a commercial paint were evaluated using Equation below.

$$\text{Solid Content of Paint (\%)} = [W_2 \, / \, W_1] \times 100 \; \dots\dots\dots\dots\dots\dots\dots\dots\dots\dots \; (1)$$

In the above equation, $W_1$ refers to the initial weight of a paint and $W_2$ refers to the weight of the paint after drying.
As calculated in equation (1), the solid content of the graphene oxide nanopaint was 64.24%, but the commercial paint was only 39.21%. This suggests that the graphene oxide nanopaint may be more economical than the commercial paint. Regarding the graphene oxide nanopaint, the time for drying surface, the time until becoming hardened, and the drying time until additional coating were observed to be 1 hour, 3 hours, and 6 hours, respectively. The drying time for the graphene oxide nanopaint was shorter than that for the commercial paint.

<1-3> Spectroscopic examination and surface analysis

For helping the understanding of the binding interaction between the alkyd synthetic resin and the graphene oxide nanosheets, analyses were performed via Fourier-transform infrared (FT-IR) spectroscopy, laser Raman spectroscopy, and X-ray photoelectron spectroscopy (XPS).

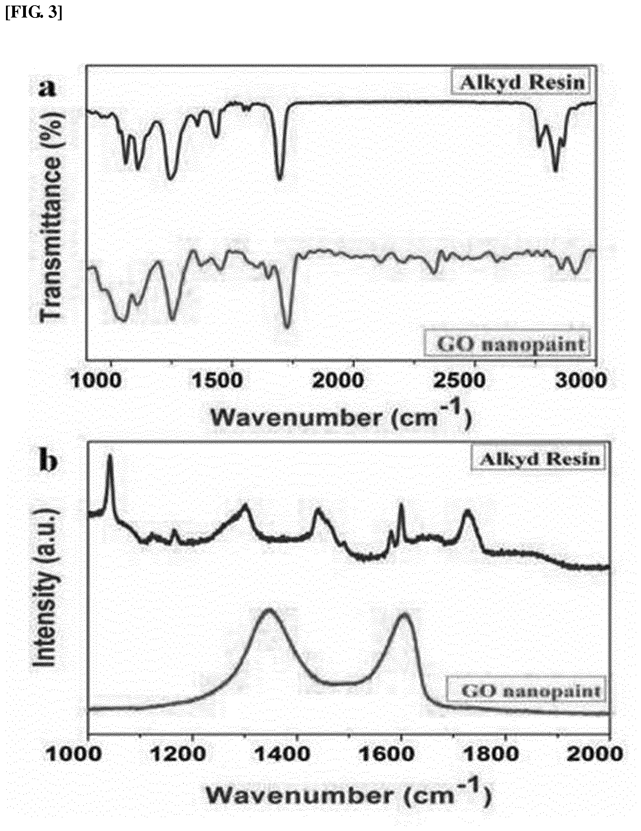

FIG. 3a illustrates the FT-IR spectra for uncoated alkyd synthetic resin and the final graphene oxide nanopaint.

The FT-IR spectrum of the uncoated alkyd synthetic resin not only represents the CO binding (1070 cm$^{-1}$), but also the presence of C-H vibration on a flat surface (1121 cm$^{-1}$), C-O-C group (1261 cm$^{-1}$), pyrrole group (1459 cm$^{-1}$, 1579 cm$^{-1}$), C-C stretching (1600 cm$^{-1}$), carboxyl group (1730 cm$^{-1}$), and C-H vibration within methyl group and methylene group (2800 cm$^{-1}$- 3000 cm$^{-1}$). All these functional groups are conserved not only in the graphene oxide nanopaint, but also in the FT-IR spectrum of the oxygen-containing functional groups present in the graphene oxide nanosheets. The characteristics of epoxyl, hydroxyl, carbonyl, and carboxyl groups are added to the spectrum of the alkyd synthetic resin. However, the intensity of C-H group of the alkyd synthetic resin was significantly reduced in the (2800 cm$^{-1}$ - 3000 cm$^{-1}$) graphene oxide nanopaint, and the peak showed a blue-movement due to the C-C vibration. The change within the carbonyl group is due to the chemical crosslinking-binding that occurs in the graphene oxide nanopaint. This experiment suggests that a structural change occurs within the graphene oxide nanopaint as the result of electrostatic interaction between the graphene oxide and the alkyd synthetic resin and/or hydrogen binding.

Raman spectroscopy is one of the non-destructive analyses used for the study of binding properties, degree of crystallinity, defects, and displacement and also functional cotaing of nanomaterials. In addition to the FT-IR spectrum, for the study of the binding interaction occurring between the graphene oxide and the alkyd synthetic resin within a nanopaint, Raman spectra of the alkyd synthetic resin and the graphene oxide nanopaint were examined, as provide in FIG. 3b. The Raman spectrum of the alkyd synthetic resin exhibited characteristic bands at 1265 cm$^{-1}$, 1443 cm$^{-1}$, 1675 cm$^{-1}$, 2900 cm$^{-1}$, and 3100 cm$^{-1}$, respectively. In contrast to the FT-IR spectrum, the bands observed in the Raman spectrum of the alkyd synthetic resin completely were disappeared from the spectrum of the graphene oxide nanopaint and only the band corresponding to the sp$^3$ carbon (1610 cm$^{-1}$) and the defect in the carbon material (1350 cm-1) were observed [41,42]. The disappearance of the Raman bands of the alkyd synthetic resin within the paint may be due to the fluorescent characteristics of graphene oxide. This coincides with the experimental results by Palus *et al.* [Palus JZ, et al., J. Mol. Struct. 2011; 993: 134 - 41]. The movement within the sp$^3$ carbon (1610 cm$^{-1}$) was observed in the spectrum of the nanopaint compared to the graphene oxide nanosheets, and this result suggests the increase in the sp$^3$ domain by the addition of the alkyd synthetic resin.

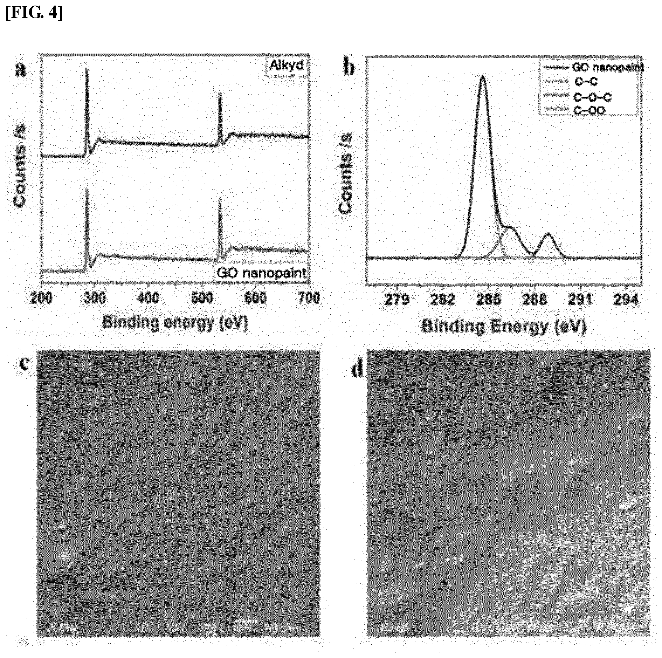

The state and composition of the surface of the graphene oxide nanopaint were examined by XPS analysis. FIG. 4a illustrates the XPS measured spectra of the alkyd synthetic resin and the graphene oxide nanopaint. From FIG. 4a, it was confirmed that the graphene oxide nanopaint showed an increase in oxygen content as compared with the alkyd synthetic resin and this was due to the presence of oxygen-containing functional group within the graphene oxide. The C/O ratio calculated from the XPS spectra of the uncoated alkyd synthetic resin and the graphene oxide nanopaint were 3.75 and 3.29, respectively. The Cls unwrapped spectrum was shown in FIG. 4b, and this represents the presence of C-C, C-O-C, and C-OO groups at 285.4 eV, 286.37 eV, and 288.88 eV, respectively, and the presence of fatty acids and ester groups within the alkyd synthetic resin was confirmed based on the same. The peaks corresponding to other ingredients of the paint including ZnO and ZrO were not observed from the XPS data, and this is due to the low mass ratio of the ingredients. The surface morphology of the painted surface was examined via a field-emission scanning electron microscopes (FE-SEM) study. FIGS. 4c and 4d represent high-resolution images of paint coating, respectively. Both images represent the uniform coating of the paste on the substrate, and the porosity was not observed in FE-SEM data. The presence of graphene oxide nanosheets within the paint was not distinguished, and this was due to the validity of the ball-milling process in preparing a uniform mixture of the paint.

<Reference Experimental Example 2>

Corrosion inhibition test

The corrosion inhibitory characteristics of graphene oxide nanopaint (in an acidic environment) were measured by the weight-loss method. For the experiment, graphene oxide nanopaint was coated on the galvanized iron (GI) substrates by brush coating. The uncoated GI substrate (control group) and the painted GI substrate were immersed into 0.1 N HCl at room temperature for 24 hours. Then, the substrates were taken out of a beaker and immersed into distilled water to remove acidic impurities, and dried at room temperature. The weight of each substrate before and after the reaction was measured and used for calculating the degree of inhibiting the corrosion by the coating. The experiment was repeatedly performed 3 times and the mean value was recorded.

FIG. 5 shows the optical images of the surfaces of GI substrates before and after the impregnation in an acid; after the impregnation, rust was formed on the uncoated GI substrate due to the oxidation of metals. However, the GI substrate coated with graphene oxide nanopaint showed no significant change (such as rust formation or flaking), and this suggests the stability of the instantly prepared paint in an acid environment. Quantitatively, the inhibition efficiency of graphene oxide nanopaint coating against corrosion was studied by the weight-loss method by Equation (2) below.

$$\text{Inhibition Efficiency (\%)} = [(\text{W}_{\text{uncoated}} - \text{W}_{\text{coated}})/\text{W}_{\text{coated}}] \times 100 \dots\dots\dots\dots\dots (2)$$

In the above equation, $\text{W}_{\text{uncoated}}$ represents the weight loss of the uncoated substrate, and $\text{W}_{\text{coated}}$ represents the weight loss of the substrate coated with graphene oxide nanopaint.

As a result, the corrosion-inhibition efficiency of the graphene oxide nanopaint coating was about 88.70% and this suggests the potential availability of the graphene oxide nanopaint in an acid-resistance coating.

<Reference Experimental Example 3>

Study on electrochemical corrosion

The corrosion inhibitory characteristics of the nanopaint coating in a salt water was measured by an electrochemical test (measurement of potentio kinetic polarization) using the Autolab PGSTAT galvanostatic method/potentiostatic method system [Chang CH, et al., Carbon 2012; 50: 5044 - 51]. The measurement was performed in a 3.5% NaCl electrolyte solution at room temperature. In the customary 3-electrode system battery, the platinum counter electrode and silver/silver chloride (Ag/AgCl) reference electrode, and test sample as the working electrode (an exposed area of 1 cm$^2$) were used together. Before the measurement of polarization, the open circuit potential (OCP) was monitored for 1 hour to confirm the stability. Upon determination of a stable OCP, the upper and lower electric potential limits of linear sweep voltammetry were set up as +200 and -200 mV, respectively. The sweep rate was 1 mV.s$^{-1}$. Corrosion potential $\text{E}_{\text{corr}}$ and corrosion current $\text{I}_{\text{corr}}$ were determined by Tafel extrapolation.

Tafel electrochemical analysis is one of the standard methods used for the study of corrosion within metals. The corrosion behavior of metals can be explained by considering anodic oxidation of metals into metal ions and cathodic reduction utilizing electrons being disappeared during oxidation reaction. The two reactions occur simultaneously and thus limiting these reactions can induce the inhibition of corrosion.

Regarding both the uncoated GI substrate and the GI substrate coated with graphene oxide nanopaint, the potentiokinetic polarization curve measured in a 3.5% NaCl solution is illustrated in FIG. 6. The $\text{E}_{\text{corr}}$, which is the corrosion potential for the uncoated GI substrate and the painted substrate, and the corrosion current density $\text{I}_{\text{corr}}$ were calculated from the potentiokinetic polarization curve by inserting them into the Tafel equation. From FIG. 6, it became obvious that the anode current density of the painted substrate was smaller than that of the uncoated substrate by more than one digit. This explains that the graphene oxide nanopaint coating significantly reduced the dissolution of metal ions from the substrate. The measured $\text{E}_{\text{corr}}$ of the GI substrate was -1047 mV and that of the painted substrate was -995 mV. The movement of the painted substrate in $\text{E}_{\text{corr}}$ was about +52 mV and it accompanied a significant decrease in $\text{I}_{\text{corr}}$ and this suggests that the graphene oxide nanopaint acts as a protective layer between the substrate and a corrosive environment thereby significantly improving the corrosion resistance of the substrate. The protection efficiency of the graphene oxide nanopaint coating, $\text{P}_{\text{i}}$, was obtained from the polarization curve calculated from the Equation below.

$$\text{P}_{\text{i}} \, (\%) = [1 - (\text{I}_{\text{corr}}/ \text{I'}_{\text{corr}})] \times 100 \dots\dots\dots\dots\dots\dots\dots\dots\dots\dots\dots(3)$$

In the above Equation, $\text{I}_{\text{corr}}$ and $\text{I'}_{\text{corr}}$ represent the corrosion current density of the substrate coated with the graphene oxide nanopaint and the uncoated substrate, respectively.

The protection efficiency of the graphene oxide nanopaint was calculated to be 76.61% and this suggests that the application of the paint in the corrosion resistance coating.

<Reference Experimental Example 4>

Study of antibacterial and antibiofouling characteristics

<4-1> Bacteria strains

Microorganisms such as *Escherichia coli* (MTCC739), *Staphylococcus aureus* (MTCC96), and *Pseudomonas aeruginosa* (MTCC1688) were obtained from bacterial strain collection and Gene Bank (IMTECH, Chandigarh, India) and maintained in an incubator (Sigma Aldrich, India).

<4-2> Antibacterial activity of graphene oxide nanopaint

The antibacterial activity of graphene oxide nanosheets was determined by microdilution method and the corresponding minimum inhibitory concentration (MIC) was measured.

As a result, the MIC values of the graphene oxide nanosheets against *Escherichia coli, Staphylococcus aureus,* and *Pseudomonas aeruginosa* were 0.5 $\mu$g/mL, 0.5 $\mu$g/mL, and 1 $\mu$g/mL, respectively. From the results, the antibacterial characteristics of the graphene oxide nanosheets were confirmed.

Additionally, the antibacterial characteristics of the surface coated with the graphene oxide nanopaint was evaluated according to the disclosure in the reference [Akhavan, O., et al., J. Mater. Chem. 21, 9634 - 9640, (2011)].

Specifically, the coated surface and the uncoated surface (*i.e.,* control group) were exposed to 200 $\mu$L of microorganisms in a culture with an initial concentration of $10^5$ CFU/mL, respectively. They were dried in the air and maintained at room temperature. After the exposure (24 hours and 48 hours), the surfaces of the materials were washed 3 times with the culture liquid. The washed culture liquid was used for colony counting by agar dilution method and for determining the cellular fractionation.

A series of 10-fold dilutions were prepared using the culture liquid, plated onto nutrient agar plates, and cultured at 37°C for 24 hours. All experiments were performed 3 times. The number of colonies in each sample was recorded and the percentage of bacteria decrease was calculated as follows.

$$\text{Bacteria decrease } (\%) = [(A - B)/A] \times 100 \dots\dots\dots\dots\dots\dots\dots\dots\dots (4)$$

In the above Equation, A represents the number of live bacteria on the uncoated surface and B represents the number of live bacteria on the painted surface.

FIG. 7c represents the percentage loss of bacterial population on the graphene oxide nanopaint after 24 hours and 48 hours. For securing the reproducibility, antibacterial tests were performed 3 times repeatedly and at least two different time was used. As a result, in 24 hours, the cellular distribution of the live cells on the painted surface regarding *Escherichia coli, Staphylococcus aureus,* and *Pseudomonas aeruginosa* were decreased to 76%, 73%, and 69%, respectively. Additionally, in 48 hours, the painted surface inhibited regarding the live cells of *Escherichia coli, Staphylococcus aureus,* and *Pseudomonas aeruginosa* by 94%, 88%, and 85%, respectively. From the results, it was confirmed that the graphene oxide nanopaint inhibited the growth of all the tested bacterial strains and increased the apoptotic rate by long hour exposure.

<4-3> Analytic study on live/dead bacteria cells

Additionally, the present inventors have performed experiments studying the antibacterial characteristics of nanopaint for the use of antibacterial coating. In this experiment, both the painted substrate and the uncoated substrate were exposed to 24 hours and 48 hours to a bacterial culture liquid, and then washed their surface with a nutrient liquid. The washed nutrient was analyzed regarding viability of bacterial cells.

Specifically, the washed nutrient liquid was centrifuged, the pellets were colored according to the manufacturer's protocol using live/dead BacLight kit (Molecular Probes, Invitrogen, Carlsbad, CA, USA). The colorant containing SYTO 9 and propidium iodide was dissolved in a mixture of 3% dimethyl sulfoxide and double-distilled water, and cultured for 15 minutes. During the process, the bacteria having an intact cell membrane was colored in green while the bacteria having a damaged cell membrane was colored in red. The highest values for excitation and luminescence for the SYTO 9 colorant were 480 nm and 500 nm, respectively, and for propidium iodide were 490 nm and 635 nm, respectively.

As a result, the exposure to a cell culture liquid caused a significant number of live cells on the uncoated surface in 48 hours as shown in FIG. 7a, whereas most cell populations consisted of dead cells on the painted surface as shown in FIG. 7b.

<4-4> *In situ* marine anti-biofouling experiment

Cell colony is the first step in forming a biomembrane, and the biomembrane induces a colony of biofouling on the surface of the major parts of the hull. Marine biofouling is estimated to cost 0.26 billion US dollars annually in a single US Navy fleet, and thus has become a serious issue in marine industry. The current issue on the marine anti-biofouling paints is the release of toxic biocides which are harmful to nature. Accordingly, it is very desirable to have a non-contamination approach for the inhibition of colonies.

As such, uncoated GI substrate (2 × 2 cm) and GI substrate (2 × 2 cm) coated with graphene oxide nanopaint were immersed into sea water in the lagoon having an ebb and flow connected to Jeju island for a period of 3 weeks, as shown in FIG. 8a. Then, the substrates were collected and their biofouling was observed.

As a result, in 3 weeks, the uncoated surface showed a significant biofouling while the painted surface showed no distinct biofouling, as shown in FIG. 8b. Furthermore, the graphene oxide nanopaint is free of toxic materials such as a chromate or biocide, and this suggests that the graphene oxide nanopaint significantly reduced its environmental influence.

<Experimental Example 5>

Analysis of characteristics of zinc oxide ($ZnO_3$) nanopaint

<5-1> Spectroscopic examination and surface analysis

For improving the understanding of binding interaction between the alkyd synthetic resin and zinc oxide nanoparticles, an XRD analysis was performed.

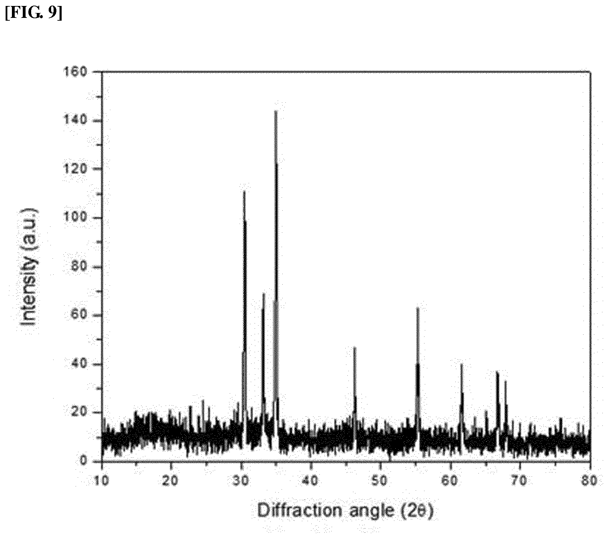

The XRD of a glass material coated with zinc oxide nanopaint showed a diffraction peak corresponding to the zincite of zinc oxide. The peaks at $2\theta$ were assigned to 31.77, 34.42, 36.25, 47.54, 56.59, 62.85, 66.32, 67.95, 69.02, and 72.79, and the temperature were assigned to (100), (002), (110), (103), (200), (112), (201), and (004) reflection line of hexagonal zincite zinc oxide particles, and coincided with zinc oxide in the hexagonal zincite state (see FIG. 9).

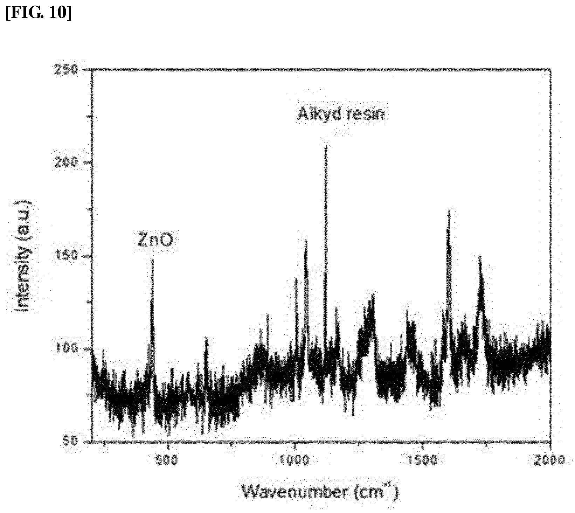

In order to study the binding interaction occurring between the zinc oxide in the nanopaint, the Raman spectra of the alkyd synthetic resin and the zinc oxide nanopaint were examined as provided in FIG. 3b. The Raman spectrum of the alkyd synthetic resin showed a characteristic band at 439 cm$^{-1}$ (see FIG. 10).

<Experimental Example 6>

Analysis of characteristics of zinc oxide ($ZnO_3$) nanopaint

<6-1> Analysis of antifouling characteristics of zinc oxide nanopaint

The present inventors have identified in previous studies that zinc oxide nanoparticles are antibacterial materials and zinc oxide nanopaint can inhibit the growth of bacteria on the surface, and in this regard, they have tested the antifouling characteristics of zinc oxide nanopaint in the lagoon of the sea of Jeju.

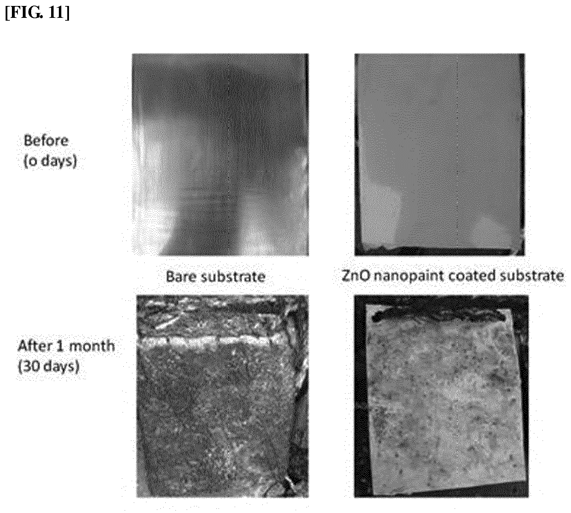

The surface not coated with the nanopaint and the surface coated with zinc oxide nanopaint were immersed and the fouling effect was observed. As a result, it was clearly shown that the zinc oxide nanopaint surface inhibited biofouling thus confirming that the zinc oxide nanopaint can be used as an antifouling paint (see FIG. 11).

<Reference Experimental Example 7>

Study of antibacterial characteristics of $MoO_3$

<7-1> Bacteria strains

Microorganisms such as *Escherichia coli* (ATCC 25922), *Staphylococcus aureus* (ATCC 25923), *Pseudomonas aeruginosa* (ATCC 27853), and *Klebsiella pneumoniae* (ATCC 10031) were used for the evaluation of antibacterial activities.

<7-2> Antibacterial activity of molybdenum ($MoO_3$), nanopaint

The antibacterial activity of molybdenum ($MoO_3$) nanoplates was determined by a microdilution method and the corresponding minimum inhibitory concentration (MIC) was measured.

As a result, the MIC values of the molybdenum ($MoO_3$) nanoplates against *Escherichia coli, Staphylococcus aureus, Pseudomonas aeruginosa,* and *Klebsiella pneumoniae* were 8 $\mu$g/mL, 8 $\mu$g/mL, 16 $\mu$g/mL, and 32 $\mu$g/mL, respectively. From the results, the antibacterial characteristics of the molybdenum nanoplates were confirmed.

Additionally, the antibacterial characteristics of the surface coated with the molybdenum nanopaint was evaluated according to the disclosure in the reference [Akhavan, O., et al., J. Mater. Chem. 21, 9634 - 9640, (2011)].

Specifically, the coated surface and the uncoated surface (*i.e.,* control group) were exposed to 200 $\mu$L of microorganisms in a culture with an initial concentration of $10^5$ CFU/mL, respectively. They were dried in the air and maintained at room temperature. After the exposure (24 hours and 48 hours), the surfaces of the materials were washed 3 times with 2 mL of the culture liquid. The washed culture liquid was used for colony counting by agar dilution method and for determining the cellular fractionation of dead cells.

A series of 10-fold dilutions were prepared using the culture liquid, plated onto nutrient agar plates, and cultured at 37°C for 24 hours. All experiments were performed 3 times. The number of colonies in each sample was recorded and the percentage of bacteria decrease was calculated as follows.

$$\text{Bacteria decrease } (\%) = [(A - B)/A] \times 100 \dots\dots\dots\dots\dots\dots\dots\dots\dots\dots\dots\dots (4)$$

In the above Equation, A represents the number of live bacteria on the uncoated surface and B represents the number of live bacteria on the painted surface.

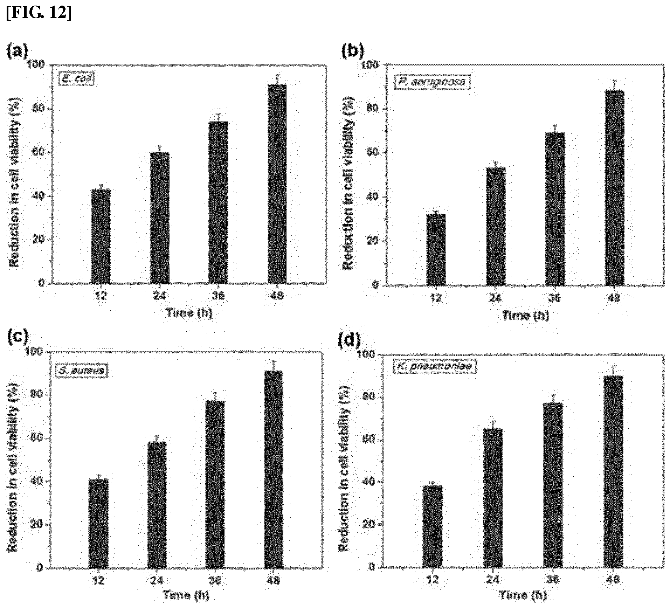

FIG. 12 shows the percentage of loss of bacterial population on the molybdenum oxide nanopaint after 24 hours and 48 hours. For securing the reproducibility, antibacterial tests were performed 3 times repeatedly and at least two different time was used. As a result, after 24 hours, the cellular distribution of the live cells on the painted surface regarding *Escherichia coli, Staphylococcus aureus, Pseudomonas aeruginosa,* and *Klebsiella pneumoniae* were decreased by 60%, 65%, 58%, and 53%, respectively. Additionally, after 48 hours, the painted surface inhibited the live cells of *Escherichia coli, Staphylococcus aureus, Pseudomonas aeruginosa,* and *Klebsiella pneumoniae* by 91%, 90%, 91%, and 88%, respectively. From the results, it was confirmed that the molybdenum oxide nanopaint inhibited the growth of all the tested bacterial strains and increased the apoptotic rate by long hour exposure (see FIG. 12).

The present invention has been described with reference to preferred exemplary embodiments. A skilled person in the art to which the present invention pertains will be able to understand that the present invention may be embodied in other specific forms without modifying the technical concepts or essential characteristics of the present invention. In this regard, the exemplary embodiments disclosed herein are only for illustrative purposes and should not be construed as limiting the scope of the present invention. The scope of the present invention is described in claims instead of being restricted by the explanations described above, and all differences falling within the equivalent scope thereof should be interpreted as being included in the present invention.

**Claims**

1. A paint composition comprising:

   15 parts by weight to 20 parts by weight of an oxide nanostructure as a pigment, wherein the oxide nanostructure is zinc oxide nanoparticles;
   60 parts by weight to 70 parts by weight of alkyd synthetic resin as a binder;
   0.5 part by weight to 1.0 part by weight of a stabilizer;
   0.3 part by weight to 0.7 part by weight of an anti-precipitator;
   0.05 part by weight to 0.15 part by weight of a thickener;
   0.5 part by weight to 1.0 part by weight of a humectant;
   1.0 part by weight to 2.0 parts by weight of a desiccant, wherein the desiccant includes 0.5 part by weight to 1.0 part by weight of an external desiccant and 0.5 part by weight to 1.0 part by weight of an internal desiccant, wherein the external desiccant is cobalt naphthenate and the internal desiccant is nano-sized zirconia; and
   15 parts by weight to 20 parts by weight of a diluent.

2. The paint composition of claim 1, wherein the stabilizer is nano-sized ZnO.

3. The paint composition of claim 1, wherein the anti-precipitator is aluminum stearate.

4. The paint composition of claim 1, wherein the humectant is bean lecithin.

5. The paint composition of claim 1, wherein the diluent is mineral turpentine.

6. A method of preparing the paint composition according to claim 1, comprising:

   (a) mixing 15 parts by weight to 20 parts by weight of an oxide nanostructure as a pigment; 60 parts by weight to 70 parts by weight of alkyd synthetic resin as a binder; 0.5 part by weight to 1.0 part by weight of a stabilizer; 0.3 part by weight to 0.7 part by weight of an anti-precipitator; 0.05 part by weight to 0.15 part by weight of a thickener; 0.5 part by weight to 1.0 part by weight of a humectant; and 1.0 part by weight to 2.0 parts by weight of a desiccant by ball-milling; and
   (b) adding 15 parts by weight to 20 parts by weight of a diluent to the ball-milled mixture and further milling to obtain a homogenous paint composition;

wherein the oxide nanostructure is zinc oxide nanoparticles,
wherein the desiccant includes 0.5 part by weight to 1.0 part by weight of an external desiccant and 0.5 part by weight to 1.0 part by weight of an internal desiccant,
wherein the external desiccant is cobalt naphthenate and the internal desiccant is nano-sized zirconia.

**7.** The method of claim 6, wherein the ball-milling includes maintaining a milling speed of 300 rpm for 4 hours to 6 hours, adding a diluent, and maintaining a milling for additional 20 minutes to 1 hour.

**Patentansprüche**

**1.** Lackzusammensetzung, umfassend:

15 Gewichtsteile bis 20 Gewichtsteile einer Oxidnanostruktur als ein Pigment, wobei es sich bei der Oxidnanostruktur um Zinkoxidnanopartikel handelt;
60 Gewichtsteile bis 70 Gewichtsteile Alkydkunstharz als Bindemittel;
0,5 Gewichtsteile bis 1,0 Gewichtsteile eines Stabilisators;
0,3 Gewichtsteile bis 0,7 Gewichtsteile eines Antifällmittels;
0,05 Gewichtsteile bis 0,15 Gewichtsteile eines Verdickungsmittels;
0,5 Gewichtsteile bis 1,0 Gewichtsteile eines Feuchthaltemittels;
1,0 Gewichtsteile bis 2,0 Gewichtsteile eines Trocknungsmittels, wobei das Trocknungsmittel 0,5 Gewichtsteile bis 1,0 Gewichtsteile eines externen Trocknungsmittels enthält und 0,5 Gewichtsteile bis 1,0 Gewichtsteile eines internen Trocknungsmittels, wobei das externe Trocknungsmittel Kobaltnaphthenat ist, und wobei das interne Trocknungsmittel Zirkonoxid in Nanogröße ist; und
15 Gewichtsteile bis 20 Gewichtsteile eines Verdünnungsmittels.

**2.** Lackzusammensetzung nach Anspruch 1, wobei der Stabilisator ZnO in Nanogröße ist.

**3.** Lackzusammensetzung nach Anspruch 1, wobei das Antifällmittel Aluminiumstearat ist.

**4.** Lackzusammensetzung nach Anspruch 1, wobei das Feuchthaltemittel Bohnenlecithin ist.

**5.** Lackzusammensetzung nach Anspruch 1, wobei das Verdünnungsmittel Testbenzin ist.

**6.** Verfahren zur Herstellung der Lackzusammensetzung nach Anspruch 1, umfassend:

(a) Mischen von 15 Gewichtsteilen bis 20 Gewichtsteilen einer Oxidnanostruktur als ein Pigment; 60 Gewichtsteilen bis 70 Gewichtsteilen Alkydkunstharz als Bindemittel; 0,5 Gewichtsteilen bis 1,0 Gewichtsteilen eines Stabilisators; 0,3 Gewichtsteilen bis 0,7 Gewichtsteilen eines Antifällmittels; 0,05 Gewichtsteilen bis 0,15 Gewichtsteilen eines Verdickungsmittels; 0,5 Gewichtsteilen bis 1,0 Gewichtsteilen eines Feuchthaltemittels; und 1,0 Gewichtsteilen bis 2,0 Gewichtsteilen eines Trocknungsmittels durch Kugelmahlen; und
(b) Zugabe von 15 Gewichtsteilen bis 20 Gewichtsteilen eines Verdünnungsmittels zu dem kugelgemahlenen Gemisch und weiteres Mahlen, um eine homogene Lackzusammensetzung zu erhalten;

wobei es sich bei der Oxidnanostruktur um Zinkoxidnanopartikel handelt,
wobei das Trocknungsmittel 0,5 Gewichtsteile bis 1,0 Gewichtsteile eines externen Trocknungsmittels enthält und 0,5 Gewichtsteile bis 1,0 Gewichtsteile eines internen Trocknungsmittels,
wobei das externe Trocknungsmittel Kobaltnaphthenat ist, und wobei das interne Trocknungsmittel Zirkonoxid in Nanogröße ist.

**7.** Verfahren nach Anspruch 6, wobei das Kugelmahlen das Aufrechterhalten einer Mahlgeschwindigkeit von 300 U/min über 4 Stunden bis 6 Stunden, die Zugabe eines Verdünnungsmittels und das Aufrechterhalten eines Mahlvorgangs über weitere 20 Minuten bis 1 Stunde umfasst.

**Revendications**

1. Composition de peinture comprenant :

    de 15 parties en poids à 20 parties en poids d'une nanostructure d'oxyde comme pigment, la nanostructure d'oxyde étant des nanoparticules d'oxyde de zinc ;
    de 60 parties en poids à 70 parties en poids de résine synthétique alkyde comme liant ;
    de 0,5 partie en poids à 1,0 partie en poids d'un stabilisant ;
    de 0,3 partie en poids à 0,7 partie en poids d'un antiprécipitateur ;
    de 0,05 partie en poids à 0,15 partie en poids d'un épaississant ;
    de 0,5 partie en poids à 1,0 partie en poids d'un humectant ;
    de 1,0 partie en poids à 2,0 parties en poids d'un desséchant, le desséchant comprenant de 0,5 partie en poids à 1,0 partie en poids d'un desséchant externe et de 0,5 partie en poids à 1,0 partie en poids d'un desséchant interne, le desséchant externe étant le naphténate de cobalt et le desséchant interne étant la zircone nanométrique ; et
    de 15 parties en poids à 20 parties en poids d'un diluant.

2. Composition de peinture selon la revendication 1, le stabilisant étant le ZnO nanométrique.

3. Composition de peinture selon la revendication 1, l'antiprécipitateur étant du stéarate d'aluminium.

4. Composition de peinture selon la revendication 1, l'humectant étant de la lécithine de soja.

5. Composition de peinture selon la revendication 1, le diluant étant de la térébenthine minérale.

6. Procédé de préparation de la composition de peinture selon la revendication 1, comprenant les étapes consistant à :

    (a) mélanger de 15 parties en poids à 20 parties en poids d'une nanostructure d'oxyde comme pigment ; de 60 parties en poids à 70 parties en poids de résine synthétique alkyde comme liant ; de 0,5 partie en poids à 1,0 partie en poids d'un stabilisant ; de 0,3 partie en poids à 0,7 partie en poids d'un antiprécipitateur ; de 0,05 partie en poids à 0,15 partie en poids d'un épaississant ; de 0,5 partie en poids à 1,0 partie en poids d'un humectant ; et de 1,0 partie en poids à 2,0 parties en poids d'un desséchant par broyage à billes ; et
    (b) ajouter de 15 parties en poids à 20 parties en poids d'un diluant au mélange broyé et broyer davantage pour obtenir une composition de peinture homogène ;

    la nanostructure d'oxyde étant des nanoparticules d'oxyde de zinc,
    le desséchant comprenant de 0,5 partie en poids à 1,0 partie en poids d'un desséchant externe et de 0,5 partie en poids à 1,0 partie en poids d'un desséchant interne,
    le desséchant externe étant le naphténate de cobalt et le desséchant interne étant la zircone nanométrique.

7. Procédé selon la revendication 6, le broyage à billes comprenant les étapes consistant à maintenir une vitesse de broyage de 300 tr/min pendant 4 heures à 6 heures, ajouter un diluant et maintenir un broyage pendant 20 minutes à 1 heure supplémentaires.

[FIG. 1]

[FIG. 2]

[FIG. 3]

[FIG. 4]

[FIG. 5]

[FIG. 6]

[FIG. 7]

[FIG. 8]

[FIG. 9]

[FIG. 10]

[FIG. 11]

Before
(o days)

Bare substrate          ZnO nanopaint coated substrate

After 1 month
(30 days)

**[FIG. 12]**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 503561

### Non-patent literature cited in the description

- **KARTHIKEYAN.** Graphene oxide and Graphene nanosheets: Tunable properties and multifunctional applications. *Mechanical Engineering, Doctor's Thesis,* December 2012
- **KRISHNAMOORTHY K et al.** *Carbon,* 2012, vol. 53, 38-49
- **KRISHNAMOORTHY K et al.** *Appl. Phys. Lett.,* 2011, vol. 98 (244101), 1-3
- **MUIZEBELT WJ et al.** Prog. Org. Coat. 2000. Wiley-VCH, 2000, vol. 40, 121-30
- **SCHAICH KM.** Baileys Industrial Oil and Fat Products. John Wiley & Sons, Inc, 2005
- **LIU Y et al.** *Rapid Commun. Mass Spectrom.,* 2011, vol. 25, 3223-34
- **PARK S et al.** *ACS Nano.,* 2008, vol. 4, 572-78
- **AKHAVAN O et al.** *Carbon,* 2012, vol. 50, 1853-60
- **VINODGOPAL K et al.** *J. Phys. Chem. Lett.,* 2010, vol. 1, 1987-93
- **KRISHNAMOORTHY K et al.** *J. Phys. Chem. C,* 2012, vol. 116, 17280-87
- **WILSON NR et al.** *ACS Nano,* 2009, vol. 3, 2547-56
- **PALUS JZ et al.** *J. Mol. Struct.,* 2011, vol. 993, 134-41
- **CHANG CH et al.** *Carbon,* 2012, vol. 50, 5044-51
- **AKHAVAN, O. et al.** *J. Mater. Chem.,* 2011, vol. 21, 9634-9640